# EUROPÄISCHE PATENTSCHRIFT

(11) **EP 2 983 943 B1**
(45) Veröffentlichungstag und Bekanntmachung des Hinweises auf die Patenterteilung: **12.06.2019**
(21) Anmeldenummer: 14717711.7
(22) Anmeldetag: 04.04.2014
(51) Int. Cl.: B60N 2/07, B60N 2/12

(54) **LÄNGSEINSTELLER FÜR EINEN FAHRZEUGSITZ UND FAHRZEUGSITZ**
LONGITUDINAL ADJUSTER FOR A VEHICLE SEAT AND VEHICLE SEAT
DISPOSITIF DE RÉGLAGE LONGITUDINAL POUR UN SIÈGE DE VÉHICULE ET SIÈGE DE VÉHICULE

(30) Priorität: 09.04.2013 DE 102013206251; 02.05.2013 DE 102013208003
(43) Veröffentlichungstag der Anmeldung: 17.02.2016
(73) Patentinhaber: Adient Luxembourg Holding S.à r.l., 1855 Luxembourg (LU)
(72) Erfinder: SCHUMANN, Kai, 66509 Rieschweiler (DE); REIMER, Peter, 67305 Ramsen (DE); TEUFEL, Ingo, 67806 Rockenhausen (DE)
(74) Vertreter: Liedhegener, Ralf
(86) Internationale Anmeldenummer: PCT/EP2014/056812
(87) Internationale Veröffentlichungsnummer: WO 2014/166833

(56) Entgegenhaltungen:
- GB-A- 388 339

## Beschreibung

Die Erfindung betrifft einen Längseinsteller für einen Fahrzeugsitz mit den Merkmalen des Oberbegriffs des Anspruchs 1. Die Erfindung betrifft auch einen Fahrzeugsitz mit den Merkmalen des Anspruchs 13.

### Stand der Technik

Aus der DE 10 2011 011 766 A1 sind ein Längseinsteller sowie ein Fahrzeugsitz bekannt. Der Längseinsteller umfasst zwei Schienenpaare mit jeweils zwei relativ zueinander verschiebbaren Sitzschienen, nämlich einer Oberschiene und einer Unterschiene, welche einander wechselseitig umgreifen. Die Oberschiene ist relativ zu der Unterschiene innerhalb eines Komforteinstellbereichs und darüber hinaus in eine Easy-Entry-Stellung verschiebbar.

Zwischen der Oberschiene und der Unterschiene sind Lagerelemente vorgesehen, welche vorzugsweise aus Kunststoff bestehende Kugelkäfige und darin drehbar gelagerte metallische Kugeln umfassen. Die Kugelkäfige sind dabei in Zwischenräumen zwischen der Oberschiene und der Unterschiene angeordnet, wobei die Kugeln in Kontakt mit der Oberschiene sowie mit der Unterschiene stehen. Bei einer Verschiebung der Oberschiene relativ zu der Unterschiene rollen die Kugeln an diesen ab.

Der Abstand der ersten Kugel zu der letzten Kugel des Kugelkäfigs definiert die Abstützlänge zwischen der Oberschiene und der Unterschiene. Die erste Kugel und die letzte Kugel sind in der Regel nahe an den Enden des Kugelkäfigs angeordnet. Somit entspricht die Länge der Kugelkäfige annähernd der Abstützlänge zwischen der Oberschiene und der Unterschiene. Je größer die Abstützlänge ist, umso höher ist die Steifigkeit des Längseinstellers.

Bei einer Verschiebung der Oberschiene relativ zu der Unterschiene um einen vorgegebenen Einstellweg bewegen sich die Kugelkäfige genau um die Hälfte dieses Einstellwegs. Die maximal mögliche Länge der Kugelkäfige ist somit durch die Länge der Oberschiene sowie der Unterschiene und durch den maximalen Einstellweg begrenzt. Dadurch sind auch die Abstützlänge und die Steifigkeit des Längseinstellers begrenzt.

Eine hohe Steifigkeit des Längseinstellers bewirkt auch eine hohe Eigenfrequenz des Fahrzeugsitzes. Dabei ist eine möglichst hohe Eigenfrequenz des Fahrzeugsitzes anzustreben, damit niederfrequente Anregungen durch das Fahrwerk des Fahrzeugs, welche auf den Fahrzeugsitz übertragen werden, nicht zu einem Aufschaukeln und damit zu störenden Geräuschen oder Schwingungen führen. Besagte Geräusche können vor allem bei einem leeren, also einem nicht von einem Insassen besetzten Fahrzeugsitz auftreten.

Aus der DE 20 2006 016 652 U1 ist ein Längseinsteller für einen Fahrzeugsitz bekannt, welcher einerseits zwischen Oberschiene und Unterschiene angeordnete drehbare Kugeln und andererseits an der Unterschiene gelagerte zylindrische Rollen umfasst.

Aus der EP 0 067 123 A1 geht ein Längseinsteller für einen Fahrzeugsitz hervor, welcher ebenfalls zwischen Oberschiene und Unterschiene angeordnete drehbare Kugeln und zusätzlich zylindrische Führungsrollen umfasst, welche um eine in Querrichtung verlaufende Achse drehbar sind.

In der DE 10 2004 038 507 A1 ist eine Rollenführung für einen Fahrzeugsitz offenbart. Die Rollenführung umfasst eine um eine in Querrichtung verlaufende Achse drehbar gelagerte Laufrolle, welche an einer Führungsschiene abrollt.

Weiterhin ist ein gattungsgemäßer Längseinsteller und ein damit ausgestatteter Fahrzeugsitz aus der GB 388 339 A bekannt.

### Aufgabe

Der Erfindung liegt die Aufgabe zu Grunde, einen Längseinsteller sowie einen Fahrzeugsitz der eingangs genannten Art zu verbessern, insbesondere die Steifigkeit des Längseinstellers und damit die Eigenfrequenz des Fahrzeugsitzes zu erhöhen.

### Lösung

Diese Aufgabe wird erfindungsgemäß durch einen Längseinsteller mit den im Anspruch 1 genannten Merkmalen gelöst.

Vorteilhafte Ausgestaltungen, welche einzeln oder in Kombination miteinander eingesetzt werden können, sind Gegenstand der Unteransprüche.

Ein gattungsgemäßer Längseinsteller für einen Fahrzeugsitz umfasst eine Unterschiene und eine darin in Längsrichtung verschiebbar geführte Oberschiene, wobei mindestens ein zusätzliches Stützelement vorgesehen ist, welches in Kontakt mit der Oberschiene und der Unterschiene steht und eine drehbare Stützrolle aufweist, wobei die Stützrolle um eine in Vertikalrichtung verlaufende Drehachse drehbar und das mindestens eine Stützelement umfasst eine Stützfeder, welche die Stützrolle in Vertikalrichtung beaufschlagt.

Das Stützelement definiert somit einen zusätzlichen Abstützpunkt zwischen der Oberschiene und der Unterschiene, welcher von dem Lagerelement beabstandet liegt. Die Abstützlänge entspricht somit annähernd dem Abstand zwischen dem Stützelement und dem von dem Lagerelement gebildeten vorderen Abstützpunkt. Der vordere Abstützpunkt des Lagerelements liegt nahe bei dem dem Stützelement abgewandten Ende des Lagerelements. Damit sind die Abstützlänge und damit auch die Steifigkeit des Längseinstellers vergrößert.

Dadurch, dass die drehbare Stützrolle den zusätzlichen Abstützpunkt definiert, entsteht eine vergleichsweise geringe Reibung, wenn die Oberschiene oder die Unterschiene an dem Stützelement entlang gleitet und die Stützrolle an der Oberschiene oder an der Unterschiene wälzt. Dadurch, dass die Stützfeder die Stützrolle in Vertikalrichtung beaufschlagt, sind Fertigungstoleranzen bei der Oberschiene oder der Unterschiene sowie bei dem Stützelement ausgleichbar, und es ist sichergestellt, dass das Stützelement ständig in Kontakt mit der Oberschiene und der Unterschiene steht.

Vorteilhaft ist das mindestens eine Stützelement in einem in Fahrtrichtung hinteren Bereich des Längseinstellers angeordnet. Dadurch wird die Abstützlänge des Längseinstellers vergrößert, wenn das Lagerelement sich in einem in Fahrtrichtung vorderen Bereich des Längseinstellers befindet. Befindet sich das Lagerelement in einem in Fahrtrichtung vorderen Bereich des Längseinstellers, so ist die Oberschiene relativ zu der Unterschiene innerhalb eines Komforteinstellbereichs und darüber hinaus in eine Easy-Entry-Stellung verschiebbar.

Vorzugsweise sind mehrere, insbesondere zwei Stützelemente vorgesehen, wobei die zwei Stützelemente vorzugsweise in Fahrtrichtung hintereinander angeordnet sind.

Gemäß einer vorteilhaften Ausgestaltung der Erfindung weist die Stützfeder einen annähernd hohlzylindrischen Grundkörper auf, von welchem mehrere Federarme abstehen, vorzugsweise in axialer Richtung oder in radialer Richtung oder in radialer und axialer Richtung.

Gemäß einer anderen vorteilhaften Ausgestaltung der Erfindung ist die Stützfeder als Wellfeder ausgestaltet.

Die Stützrolle weist vorzugsweise eine zur Vertikalrichtung geneigte Oberfläche auf, auf welcher sich der von der Stützrolle zusätzlich definierte Abstützpunkt befindet.

Erfindungsgemäß ist das mindestens eine Stützelement an der Unterschiene und damit fahrzeugfest angeordnet und in Querrichtung außermittig zu der Unterschiene angeordnet. Dadurch berührt die Oberschiene die Stützrolle des Stützelements bei einer Verschiebung relativ zu der Unterschiene nur in Querrichtung auf einer Seite. Damit ist eine Drehung der Stützrolle um die in Vertikalrichtung verlaufende Drehachse ermöglicht.

Die Stützrolle ist vorzugsweise auf einem kreiszylindrisch ausgestalteten Lagerbolzen drehbar gelagert, dessen Mittelachse mit der Drehachse fluchtet. Vorzugsweise ist das Stützelement derart aufgebaut, dass der Lagerbolzen die Stützfeder durchragt.

Gemäß einer vorteilhaften Weiterbildung der Erfindung ist der Lagerbolzen an der Unterschiene befestigt und weist an seinem dieser Schiene abgewandten Ende eine flanschartige Erweiterung auf. Die flanschartige Erweiterung verhindert, dass die Stützrolle von der Stützfeder weiter von der Schiene weg gedrückt wird.

Gemäß einer vorteilhaften Ausgestaltung ist ein Kontaktabstand größer als eine Stützweite der Stützrolle. Der Kontaktabstand ist dabei der Abstand zwischen dem Abstützpunkt der Oberschiene auf der Stützrolle und der Drehachse der Stützrolle.

Die Stützweite ist die Ausdehnung der Stützrolle in Vertikalrichtung. Dadurch wirkt auf die Stützrolle ein Kippmoment, welches die Stützrolle relativ zu dem Lagerbolzen beaufschlagt. Dadurch ist die Reibkraft, welche zwischen dem Lagerbolzen und der Stützrolle in Vertikalrichtung wirkt, vergrößert und die Steifigkeit des Längseinstellers weiter erhöht.

Ebenfalls gemäß einer vorteilhaften Ausgestaltung ist der Kontaktabstand größer als ein Stützabstand der Stützfeder. Der Stützabstand ist dabei der Abstand des Angriffspunkts der Stützfeder an der Stützrolle zu der Drehachse.

Vorzugsweise besteht die Stützrolle aus einem nichtmetallischen Material, insbesondere aus Kunststoff. Dadurch hat die Stützrolle ein verhältnismäßig geringes Gewicht und einen ausreichend hohen Reibwert zu dem Lagerbolzen sowie zu der Oberschiene.

Die Aufgabe wird auch durch einen Fahrzeugsitz mit den im Anspruch 13 genannten Merkmalen gelöst, welcher mindestens einen erfindungsgemäßen Längseinsteller aufweist. Durch die erhöhte Steifigkeit des Längseinstellers ist die Eigenfrequenz des Fahrzeugsitzes erhöht.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine Draufsicht auf ein Schienenpaar eines Längseinstellers in einer hinteren Einstellposition,
- Fig. 2:: eine Draufsicht auf das Schienenpaar des Längseinstellers in einer vorderen Einstellposition,
- Fig. 3:: einen Schnitt durch das Schienenpaar in der hinteren Einstellposition entlang der Schnittlinie A - A in Fig. 1,
- Fig. 4:: einen Schnitt durch das Schienenpaar in der vorderen Einstellposition entlang der Schnittlinie B - B in Fig. 2,
- Fig. 5:: einen Schnitt durch ein Schienenpaar gemäß einem ersten Ausführungsbeispiel in der hinteren Einstellposition entlang der Schnittlinie C - C in Fig. 3,
- Fig. 6:: eine teilweise Explosionsdarstellung des Schienenpaares des ersten Ausführungsbeispiels,
- Fig. 7:: eine schematische Darstellung eines Fahrzeugsitzes,
- Fig. 8:: einen Schnitt durch ein Schienenpaar gemäß einem zweiten Ausführungsbeispiel in der hinteren Einstellposition entlang der Schnittlinie C - C in Fig. 3 und
- Fig. 9:: eine teilweise Explosionsdarstellung des Schienenpaares des zweiten Ausführungsbeispiels,

Ein Fahrzeugsitz 1 für ein Kraftfahrzeug, vorliegend ein Fondsitz, weist ein Sitzteil 2 und eine daran angebrachte, neigungseinstellbare Rückenlehne 10 auf. Bei dem Fahrzeugsitz könnte es sich aber auch um einen Vordersitz handeln.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

An dem in Vertikalrichtung oberen Ende der Rückenlehne 10, welches dem Sitzteil 2 abgewandt ist, ist ferner eine nicht dargestellte Kopfstütze angebracht.

Mittels eines Längseinstellers, welcher zwei mit dem Fahrzeugboden des Kraftfahrzeuges verbundene Unterschienen 5 sowie zwei Oberschienen 3 aufweist, ist der Fahrzeugsitz 1 längseinstellbar. Das bedeutet, das Sitzteil 2 ist zusammen mit der Rückenlehne 10 in und gegen Längsrichtung, welche vorliegend der Fahrtrichtung entspricht, einstellbar. Dazu ist jede der Oberschienen 3 in jeweils einer der parallel in Längsrichtung verlaufenden Unterschienen 5 verschiebbar geführt.

Die verwendeten Richtungsangaben Vertikalrichtung, Fahrtrichtung und Querrichtung, welche sich auf den Längseinsteller sowie Teile des Längseinstellers beziehen, gelten für eine gewöhnliche Anordnung des Längseinstellers sowie des Fahrzeugsitzes in dem Fahrzeug.

Jede der beiden Oberschienen 3 bildet jeweils mit der zugeordneten Unterschiene 5 ein Sitzschienenpaar. Der Längseinsteller umfasst somit zwei in Querrichtung zueinander versetzt angeordnete und parallel zueinander verlaufende Sitzschienenpaare.

Mittels je einer Verriegelungsvorrichtung 14 ist jede der beiden Oberschienen 3 mit der jeweiligen Unterschiene 5 verriegelbar. Mittels eines Entriegelungsbügels 16 sind die Verriegelungsvorrichtungen 14 entriegelbar. Alternativ ist auch ein elektrischer Antrieb denkbar.

Die beiden Sitzschienenpaare sind vorliegend spiegelsymmetrisch aufgebaut. Im Folgenden wird daher nur auf ein Sitzschienenpaar des Längseinstellers eingegangen.

Zwischen der Oberschiene 3 und der Unterschiene 5 sind Lagerelemente angeordnet, welche vorliegend aus Kunststoff bestehende Kugelkäfige 30 und mehrere darin drehbar gelagerte metallische Kugeln umfassen. Auch andere Arten von Lagerelementen, beispielsweise in Form von zylindrischen Rollen oder anderen Wälzkörpern, sind denkbar.

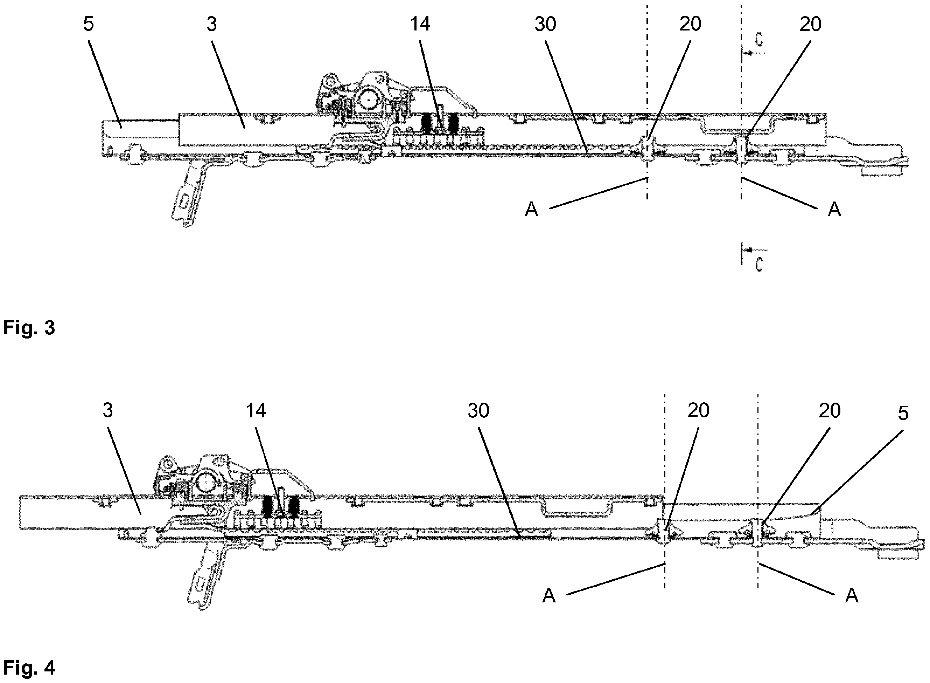

In den Darstellungen nach Fig. 3 und Fig. 4 ist jeweils ein Kugelkäfig 30 sichtbar. Die in den Kugelkäfigen 30 drehbar gelagerten Kugeln stehen in Kontakt mit der Oberschiene 3 und mit der Unterschiene 5.

In einem in Fahrtrichtung hinteren Bereich der Unterschiene 5 sind vorliegend zwei Stützelemente 20 angeordnet. Jedes der beiden Stützelemente 20 umfasst dabei eine Stützrolle 22, einen Lagerbolzen 24 und eine Stützfeder 26. Es ist auch denkbar, eines oder beide Stützelemente 20 in einem in Fahrtrichtung vorderen Bereich der Unterschiene 5 anzuordnen.

Die beiden Stützelemente 20 sind vorliegend in Fahrtrichtung hintereinander angeordnet, wobei das in Fahrtrichtung vorne befindliche Stützelement 20 als vorderes Stützelement 20 und das in Fahrtrichtung hinten befindliche Stützelement 20 als hinteres Stützelement 20 bezeichnet wird. Die beiden Stützelemente 20 sind dabei in Querrichtung versetzt zueinander anzuordnen.

Die beiden Stützelemente 20 sind vorliegend jeweils identisch aufgebaut, weshalb im Folgenden nur eines der Stützelemente 20 näher beschrieben wird.

Der Lagerbolzen 24 hat annähernd die Form eines Kreiszylinders und ist derart an der Unterschiene 5 angeordnet, dass seine Mittelachse in Vertikalrichtung verläuft. Der Lagerbolzen 24 ist in eine dafür vorgesehene Öffnung in der Unterschiene 5 eingesetzt und dort befestigt.

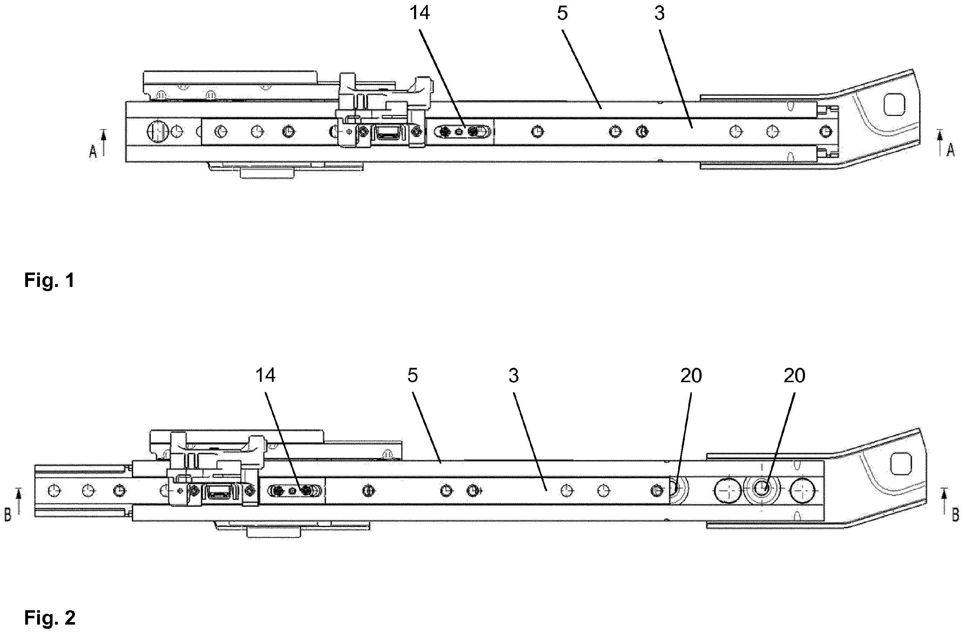

Die Darstellungen in Fig. 1, Fig. 2, Fig. 3, Fig. 4 und Fig. 7 betreffen das erste Ausführungsbeispiel und das zweite Ausführungsbeispiel.

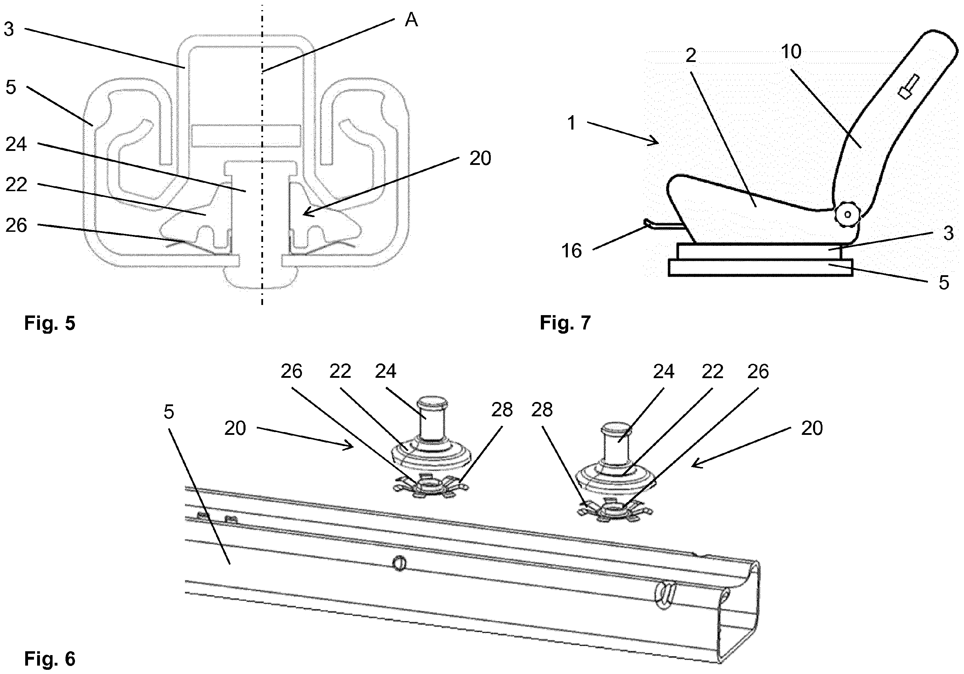

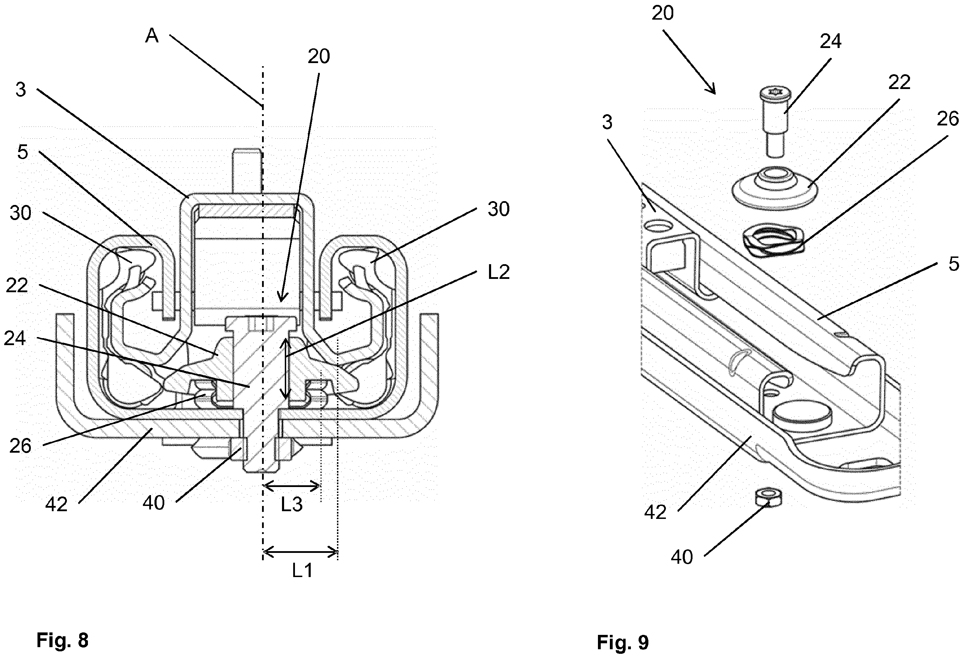

Bei einem ersten, in Fig. 5 und Fig. 6 dargestellten Ausführungsbeispiel ist der Lagerbolzen 24 mit der Unterschiene 5 vernietet. Bei einem zweiten, in Fig. 8 und Fig. 9 dargestellten Ausführungsbeispiel ist der Lagerbolzen 24 mittels einer Mutter 40 an der Unterschiene 5 angeschraubt. Auch andere Befestigungsmöglichkeiten, beispielsweise Schweißen, sind denkbar. Bei dem zweiten Ausführungsbeispiel ist ferner eine zusätzliche Verstärkungsklammer 42 mit der Unterschiene 5 verbunden, welche die Steifigkeit des Schienenpaares erhöht.

Die Öffnung in der Unterschiene 5, in welche der Lagerbolzen 24 eingesetzt ist, befindet sich in Querrichtung nicht in der Mitte der Unterschiene 5 sondern ist in Querrichtung nach außen versetzt angeordnet. Somit ist auch der Lagerbolzen 24, und damit auch seine Mittelachse, relativ zu der Mitte der Unterschiene 5 in Querrichtung nach außen versetzt.

Die Stützrolle 22, welche eine zur Vertikalrichtung geneigte Oberfläche aufweist, ist um eine Drehachse A drehbar auf dem Lagerbolzen 24 gelagert, wobei der Innendurchmesser der Stützrolle 22 annähernd dem Außendurchmesser des Lagerbolzens 24 entspricht. Der Lagerbolzen 24 durchragt also die Stützrolle 22, welche vorliegend aus Kunststoff besteht. Die Stützrolle 22 ist somit um die in Vertikalrichtung verlaufende Mittelachse des Lagerbolzens 24 drehbar, welche mit der Drehachse A der Stützrolle 22 fluchtet. Damit liegt auch die Drehachse A der Stützrolle 22 relativ zu der Mitte der Unterschiene 5 in Querrichtung nach außen versetzt.

Die Oberschiene 3 weist an ihrem in Fahrtrichtung hinteren Ende in dem in Vertikalrichtung unteren Bereich eine Fase auf, also eine geneigt zur Vertikalrichtung und geneigt zur Fahrtrichtung verlaufende Schräge.

Die Stützfeder 26 gemäß dem ersten, in Fig. 5 und Fig. 6 dargestellten Ausführungsbeispiel umfasst einen annähernd hohlzylindrischen Grundkörper, von welchem mehrere Federarme 28 in radialer und axialer Richtung abstehen. Dabei stehen die Federarme 28 zunächst in radialer Richtung von dem Grundkörper ab und weisen im weiteren Verlauf eine Krümmung in axialer Richtung auf. Der Lagerbolzen 24 durchragt die Stützfeder 26 ähnlich wie die Stützrolle 22, wobei der Innendurchmesser des Grundkörpers der Stützfeder 26 annähernd dem Außendurchmesser des Lagerbolzens 24 entspricht.

Die Stützfeder 26 gemäß dem ersten Ausführungsbeispiel ist in Vertikalrichtung unterhalb der Stützrolle 22 angeordnet, also axial versetzt, und stützt sich, vorliegend mit ihrem Grundkörper, an der Unterschiene 5 ab. Die Federarme 28 stehen radial nach außen und in Vertikalrichtung nach oben von dem Grundkörper ab und beaufschlagen die Stützrolle 22 in Vertikalrichtung nach oben. Die Stützfeder 26 kann auch eine anders ausgestaltete Form eines elastischen Elements aufweisen.

Beispielsweise ist die Stützfeder 26 gemäß dem zweiten Ausführungsbeispiel als Wellfeder ausgestaltet und umfasst einen annähernd hohlzylindrischen Grundkörper aus einem gewundenen Flachmaterial. Der Lagerbolzen 24 durchragt die Stützfeder 26, welche in Vertikalrichtung unterhalb der Stützrolle 22, also axial versetzt zu dieser, angeordnet ist. Die Stützfeder 26 beaufschlagt die Stützrolle 22 in Vertikalrichtung nach oben.

An seinem in Vertikalrichtung oberen Ende weist der Lagerbolzen 24 eine flanschartige Erweiterung auf, welche verhindert, dass die Stützrolle 22 durch die von den Federarmen 28 oder der Stützfeder 26 aufgebrachte Federkraft weiter nach oben gedrückt wird. Die Stützrolle 22 ist somit, solange kein Kontakt mit der Oberschiene 3 besteht, zwischen der flanschartigen Erweiterung des Lagerbolzens 24 und der Stützfeder 26 eingespannt.

Befindet sich der Längseinsteller in einer hinteren Einstellposition, wie in Fig. 1, Fig. 3, Fig. 5 und Fig. 8 dargestellt, so ist ein Seitenbereich der Oberschiene 3 in Kontakt mit den Stützrollen 22 der beiden Stützelemente 20. Dabei drückt die Oberschiene 3 die Stützrollen 22 entgegen der von der Stützfeder 26 aufgebrachten Federkraft in Vertikalrichtung nach unten. Beide Stützelemente 20 stützen also die Oberschiene 3 in Fahrtrichtung in einem hinteren Bereich ab und beaufschlagen dabei die Oberschiene 3 in Vertikalrichtung.

Gemäß dem zweiten Ausführungsbeispiel und in Fig. 8 dargestellt hat die Stützrolle 22 in Vertikalrichtung eine Ausdehnung, welche als Stützweite L2 bezeichnet wird. Der Abstützpunkt der Oberschiene 3 auf der Stützrolle 22 befindet sich im einen Kontaktabstand L1 von der Drehachse A entfernt. Dabei ist der Kontaktabstand L1 vorliegend größer als die Stützweite L2 der Stützrolle 22.

Gemäß dem zweiten Ausführungsbeispiel und ebenfalls in Fig. 8 dargestellt greift die Stützfeder 26 in einem Stützabstand L3 von der Drehachse A an der Stützrolle 22 an. Dabei ist der Kontaktabstand L1 vorliegend größer als der Stützabstand L3 der Stützfeder 26.

Wenn die Oberschiene 3 mit der Unterschiene 5 verriegelt ist und in Kontakt mit der Stützrolle 22 steht, so wirkt aufgrund der beschriebenen geometrischen Ausgestaltung und Anordnung des Stützelements 20 gemäß dem zweiten Ausführungsbeispiel auf die Stützrolle 22 ein Kippmoment, welches die Stützrolle 22 relativ zu dem Lagerbolzen 24 beaufschlagt. Dadurch ist die Reibkraft, welche zwischen dem Lagerbolzen 24 und der Stützrolle 22 in Vertikalrichtung wirkt, erhöht. Dadurch ist die Steifigkeit des Längseinstellers weiter erhöht.

Wenn sich der Längseinsteller in der hinteren Einstellposition befindet, so entspricht die Abstützlänge zwischen der Oberschiene 3 und der Unterschiene 5 annähernd dem Abstand zwischen dem in Fahrtrichtung vorderen Ende des Kugelkäfigs 30 und dem hinteren Stützelement 20.

Wird nun, ausgehend von der hinteren Einstellposition, die Oberschiene 3 relativ zu der Unterschiene 5 nach vorne, in Richtung auf eine vordere Einstellposition hin, verschoben, so verbleibt die Oberschiene 3 zunächst in Kontakt mit dem hinteren Stützelement 20, während sich der Kugelkäfig 30 nach vorne bewegt. Die Abstützlänge zwischen der Oberschiene 3 und der Unterschiene 5 vergrößert sich somit zunächst.

Bei der Bewegung der Oberschiene 3 nach vorne verbleibt diese, wie bereits erwähnt, in Kontakt mit der Stützrolle 22 und verursacht dadurch eine Drehung der Stützrolle 22 um ihre in Vertikalrichtung verlaufende Drehachse A. Die Stützrolle 22 wälzt also entlang der Oberschiene 3 auf dieser ab.

Bei einer derart verursachten Drehung der Stützrolle 22 gemäß dem zweiten Ausführungsbeispiel sinkt die Reibkraft, welche zwischen dem Lagerbolzen 24 und der Stützrolle 22 in Vertikalrichtung wirkt. Dadurch ist auch die erforderliche Verschiebekraft der Oberschiene 3 verringert. Vorliegend ist die der Oberschiene 3 zu gewandte Oberfläche der Stützrolle 22 profiliert, wodurch der Kontakt der Stützrolle 22 mit der Oberschiene 3 verbessert ist.

Erreicht der Längseinsteller nach einem vorgegebenen Einstellweg eine mittlere Einstellposition, so verlässt die Oberschiene 3 das hintere Stützelement 20 und steht ab dann nur noch in Kontakt mit dem vorderen Stützelement 20. Die Abstützlänge zwischen der Oberschiene 3 und der Unterschiene 5 entspricht dann annähernd dem Abstand zwischen dem in Fahrtrichtung vorderen Ende des Kugelkäfigs 30 und dem vorderen Stützelement 20. Der Kugelkäfig 30 befindet sich jedoch in der mittleren Einstellposition weiter vorne als in der hinteren Einstellposition.

Wird nun, ausgehend von der mittleren Einstellposition, die Oberschiene 3 relativ zu der Unterschiene 5 weiter nach vorne, in Richtung auf die vordere Einstellposition hin, verschoben, so verbleibt die Oberschiene 3 in Kontakt mit dem vorderen Stützelement 20, während sich der Kugelkäfig 30 nach vorne bewegt. Die Abstützlänge zwischen der Oberschiene 3 und der Unterschiene 5 vergrößert sich somit wieder.

Befindet sich der Längseinsteller in der vorderen Einstellposition, wie in Fig. 2 und Fig. 4 dargestellt, so ist ein Seitenbereich der Oberschiene 3 in Kontakt mit der Stützrolle 22 des in Fahrtrichtung vorderen Stützelements 20. Dabei drückt die Oberschiene 3 die Stützrolle 20 entgegen der von der Stützfeder 26 aufgebrachten Federkraft in Vertikalrichtung nach unten und das vordere Stützelement 20 stützt somit die Oberschiene 3 in Fahrtrichtung in einem hinteren Bereich ab. Es besteht kein Kontakt zwischen der Oberschiene 3 und der hinteren Stützrolle 20.

Wenn sich der Längseinsteller in der vorderen Einstellposition befindet, so entspricht die Abstützlänge zwischen der Oberschiene 3 und der Unterschiene 5 annähernd dem Abstand zwischen dem in Fahrtrichtung vorderen Ende des Kugelkäfigs 30 und dem vorderen Stützelement 20. In der vorderen Einstellposition befindet sich der Kugelkäfig 30 dabei weiter vorne als in der mittleren Einstellposition.

Wird nun, ausgehend von der vorderen Einstellposition, die Oberschiene 3 relativ zu der Unterschiene 5 weiter nach vorne, also über die vordere Einstellposition hinaus in eine Easy-Entry-Stellung verschoben, so verlässt die Oberschiene 3 auch das vordere Stützelement 20. Wenn sich der Längseinsteller in der Easy-Entry-Stellung befindet, so entspricht die Abstützlänge zwischen der Oberschiene 3 und der Unterschiene 5 annähernd der Länge des Kugelkäfigs 30.

Wird die Oberschiene 3 aus der Easy-Entry-Stellung entgegen der Fahrtrichtung nach hinten verschoben, so gelangt das hintere Ende der Oberschiene 3 wieder in Kontakt mit der Stützrolle 22 des vorderen Stützelements 20. Dabei trifft die an dem hinteren Ende der Oberschiene 3 befindliche Fase auf die geneigt zur Vertikalrichtung verlaufende Oberfläche der Stützrolle 22, wodurch der Auffahrvorgang der Oberschiene 3 auf die Stützrolle 22 erleichtert ist und die zur Bewegung der Oberschiene 3 erforderliche Verschiebekraft verringert ist.

### Bezugszeichenliste

- 1: Fahrzeugsitz
- 2: Sitzteil
- 3: Oberschiene
- 5: Unterschiene
- 10: Rückenlehne
- 14: Verriegelungsvorrichtung
- 16: Entriegelungsbügel
- 20: Stützelement
- 22: Stützrolle
- 24: Lagerbolzen
- 26: Stützfeder
- 28: Federarm
- 30: Kugelkäfig
- 40: Mutter
- 42: Verstärkungsklammer
- A: Drehachse
- L1: Kontaktabstand
- L2: Stützweite
- L3: Stützabstand

## Patentansprüche

1. Längseinsteller für einen Fahrzeugsitz (1),
umfassend eine Unterschiene (5) und eine darin in Längsrichtung verschiebbar geführte Oberschiene (3),
wobei
mindestens ein zusätzliches Stützelement (20) vorgesehen ist, welches in Kontakt mit der Oberschiene (3) und der Unterschiene (5) steht und eine drehbare Stützrolle (22) aufweist,
wobei die Stützrolle (22) um eine in Vertikalrichtung verlaufende Drehachse (A) drehbar ist und
das mindestens eine Stützelement (20) eine Stützfeder (26) umfasst, welche die Stützrolle (22) in Vertikalrichtung beaufschlagt,
**dadurch gekennzeichnet, dass**
mindestens ein zwischen der Oberschiene (3) und der Unterschiene (5) angeordnetes Lagerelement (30) in Kontakt mit der Oberschiene (3) und der Unterschiene (5) steht,
wobei
das mindestens eine Stützelement (20) an der Unterschiene (5) angeordnet ist und in Querrichtung außermittig zu der Unterschiene (5) angeordnet ist.

2. Längseinsteller nach Anspruch 1, **dadurch gekennzeichnet, dass** das mindestens eine Stützelement (20) in einem in Fahrtrichtung hinteren Bereich des Längseinstellers angeordnet ist.

3. Längseinsteller nach einem der vorstehenden Ansprüche, **dadurch gekennzeichnet, dass** mehrere, insbesondere zwei Stützelemente (20) vorgesehen sind, welche vorzugsweise in Fahrtrichtung hintereinander angeordnet sind.

4. Längseinsteller nach einem der vorstehenden Ansprüche, **dadurch gekennzeichnet, dass** die Stützfeder (26) einen annähernd hohlzylindrischen Grundkörper aufweist, von welchem mehrere Federarme (28) in radialer und/oder axialer Richtung abstehen.

5. Längseinsteller nach einem der vorstehenden Ansprüche, **dadurch gekennzeichnet, dass** die Stützfeder (26) als Wellfeder ausgestaltet ist.

6. Längseinsteller nach einem der vorstehenden Ansprüche, **dadurch gekennzeichnet, dass** die Stützrolle (22) eine zur Vertikalrichtung geneigte Oberfläche aufweist.

7. Längseinsteller nach einem der vorstehenden Ansprüche, **dadurch gekennzeichnet, dass** die Stützrolle (22) auf einem kreiszylindrisch ausgestalteten Lagerbolzen (24) drehbar gelagert ist, dessen Mittelachse mit der Drehachse (A) fluchtet.

8. Längseinsteller nach Anspruch 7, **dadurch gekennzeichnet, dass** der Lagerbolzen (24) die Stützfeder (26) durchragt.

9. Längseinsteller nach einem der Ansprüche 7 bis 8, **dadurch gekennzeichnet, dass** der Lagerbolzen (24) an der Unterschiene (5) befestigt ist und an seinem der Unterschiene (5) abgewandten Ende eine flanschartige Erweiterung aufweist.

10. Längseinsteller nach einem der vorstehenden Ansprüche 7 - 9, **dadurch gekennzeichnet, dass** ein Kontaktabstand (L1) größer ist als eine Stützweite (L2) der Stützrolle (22).

11. Längseinsteller nach Anspruch 10, **dadurch gekennzeichnet, dass** der Kontaktabstand (L1) größer ist als ein Stützabstand (L3) der Stützfeder (26).

12. Längseinsteller nach einem der vorstehenden Ansprüche, **dadurch gekennzeichnet, dass** die Stützrolle (22) aus einem nichtmetallischen Material, insbesondere aus Kunststoff, besteht.

13. 15. Fahrzeugsitz (1), umfassend mindestens einen Längseinsteller nach einem der vorstehenden Ansprüche.

## Claims

1. Longitudinal adjuster for a vehicle seat (1) comprising a lower rail (5) and an upper rail (3) which is guided therein such that it can be displaced in the longitudinal direction, wherein at least one additional supporting element (20) is provided, said supporting element being in contact with the upper rail (3) and the lower rail (5) and having a rotatable supporting roller (22), wherein the supporting roller (22) can be rotated about a rotational axis (A) which runs in the vertical direction and the at least one supporting element (20) comprises a supporting spring (26) which loads the supporting roller (22) in the vertical direction,
**characterized in that**
at least one bearing element (30) which is arranged between the upper rail (3) and the lower rail (5) is in contact with the upper rail (3) and the lower rail (5),
wherein
the at least one supporting element (20) is arranged on the lower rail (5) and is arranged eccentrically to the lower rail (5) in the transverse direction.

2. Longitudinal adjuster according to claim 1, **characterized in that** the at least one supporting element (20) is arranged in a rear region of the longitudinal adjuster in the direction of travel.

3. Longitudinal adjuster according to one of the preceding claims, **characterized in that** a plurality of, in particular two, supporting elements (20) are provided, said supporting elements being preferably arranged one behind the other in the direction of travel.

4. Longitudinal adjuster according to one of the preceding claims, **characterized in that** the supporting spring (26) has an approximately hollow cylindrical base body, a plurality of spring arms (28) protruding therefrom in the radial and/or axial direction.

5. Longitudinal adjuster according to one of the preceding claims, **characterized in that** the supporting spring (26) is designed as a wave spring.

6. Longitudinal adjuster according to one of the preceding claims, **characterized in that** the supporting roller (22) has a surface which is inclined relative to the vertical direction.

7. Longitudinal adjuster according to one of the preceding claims, **characterized in that** the supporting roller (22) is rotatably mounted on a bearing pin (24) of circular cylindrical design, the central axis thereof being aligned with the rotational axis (A).

8. Longitudinal adjuster according to claim 7, **characterized in that** the bearing pin (24) penetrates the supporting spring (26).

9. Longitudinal adjuster according to one of claims 7 to 8, **characterized in that** the bearing pin (24) is fastened to the lower rail (5) and has a flange-like widened portion at its end remote from the lower rail (5).

10. Longitudinal adjuster according to one of the preceding Claims 7 to 9, **characterized in that** a contact spacing (L1) is greater than a support width (L2) of the supporting roller (22).

11. Longitudinal adjuster according to Claim 10, **characterized in that** the contact spacing (L1) is greater than a support spacing (L3) of the supporting spring (26).

12. Longitudinal adjuster according to one of the preceding claims, **characterized in that** the supporting roller (22) consists of a non-metal material, in particular made of plastics material.

13. Vehicle seat (1) comprising at least one longitudinal adjuster according to one of the preceding claims.

## Revendications

1. Dispositif de réglage longitudinal pour un siège de véhicule (1), comprenant un rail inférieur (5) et un rail supérieur (3) guidé dans celui-ci de façon déplaçable en direction longitudinale,
dans lequel il est prévu au moins un élément de soutien supplémentaire (20), qui est en contact avec le rail supérieur (3) et avec le rail inférieur (5) et qui présente un rouleau de soutien rotatif (22),
dans lequel le rouleau de soutien (22) peut tourner autour d'un axe de rotation (A) s'étendant en direction verticale, et ledit au moins un élément de soutien (20) comprend un ressort de soutien (26), qui agit sur le rouleau de soutien (22) en direction verticale, **caractérisé en ce qu'**au moins un élément d'appui (30) disposé entre le rail supérieur (3) et le rail inférieur (5) est en contact avec le rail supérieur (3) et avec le rail inférieur (5),
dans lequel ledit au moins un élément de soutien (20) est disposé sur le rail inférieur (5) et est disposé en direction transversale de façon décentrée par rapport au rail inférieur (5).

2. Dispositif de réglage longitudinal selon la revendication 1, **caractérisé en ce que** ledit au moins un élément de soutien (20) est disposé dans une région arrière du dispositif de réglage longitudinal dans le sens de la marche.

3. Dispositif de réglage longitudinal selon l'une quelconque des revendications précédentes, **caractérisé en ce qu'**il est prévu plusieurs, en particulier deux, éléments de soutien (20), qui sont de préférence disposés l'un derrière l'autre dans le sens de la marche.

4. Dispositif de réglage longitudinal selon l'une quelconque des revendications précédentes, **caractérisé en ce que** le ressort de soutien (26) présente un corps de base approximativement cylindrique creux, sur lequel plusieurs bras de ressort (28) sont saillants en direction radiale et/ou axiale.

5. Dispositif de réglage longitudinal selon l'une quelconque des revendications précédentes, **caractérisé en ce que** le ressort de soutien (26) est formé par un ressort ondulé.

6. Dispositif de réglage longitudinal selon l'une quelconque des revendications précédentes, **caractérisé en ce que** le rouleau de soutien (22) présente une surface inclinée par rapport à la direction verticale.

7. Dispositif de réglage longitudinal selon l'une quelconque des revendications précédentes, **caractérisé en ce que** le rouleau de soutien (22) est monté de façon rotative sur un axe de palier de forme cylindrique ronde (24), dont l'axe central est aligné avec l'axe de rotation (A).

8. Dispositif de réglage longitudinal selon la revendication 7, **caractérisé en ce que** l'axe de palier (24) traverse le ressort de soutien (26).

9. Dispositif de réglage longitudinal selon une des revendications 7 à 8, **caractérisé en ce que** l'axe de palier (24) est fixé au rail inférieur (5) et présente à son extrémité éloignée du rail inférieur (5) un élargissement en forme de bride.

10. Dispositif de réglage longitudinal selon l'une quelconque des revendications précédentes 7 à 9, **caractérisé en ce qu'**une distance de contact (L1) est plus grande qu'une largeur de soutien (L2) du rouleau de soutien (22).

11. Dispositif de réglage longitudinal selon la revendication 10, **caractérisé en ce que** la distance de contact (L1) est plus grande qu'une distance de soutien (L3) du ressort de soutien (26).

12. Dispositif de réglage longitudinal selon l'une quelconque des revendications précédentes, **caractérisé en ce que** le rouleau de soutien (22) est constitué d'un matériau non métallique, en particulier de matière plastique.

13. Siège de véhicule (1), comprenant au moins un dispositif de réglage longitudinal selon l'une quelconque des revendications précédentes.
